# EUROPÄISCHE PATENTSCHRIFT

(11) **EP 3 808 796 B1**
(45) Veröffentlichungstag und Bekanntmachung des Hinweises auf die Patenterteilung: **04.12.2024**
(21) Anmeldenummer: 19203661.4
(22) Anmeldetag: 16.10.2019
(51) Int. Cl.: C08J 3/20, C08J 3/22

(54) **MASTERBATCH ENTHALTEND RUSS, POLYMERWERKSTOFF UMFASSEND DEN MASTERBATCH, FORMKÖRPER GEBILDET AUS DEM MASTERBATCH ODER DEM POLYMERWERKSTOFF UND VERFAHREN ZUR HERSTELLUNG DES MASTERBATCHES**
MASTERBATCH COMPRISING CARBON BLACK, POLYMER MATERIAL COMPRISING THE MASTERBATCH, MOULDED OBJECT FORMED FROM THE MASTERBATCH OR THE POLYMER MATERIAL AND METHOD FOR PRODUCING THE MASTERBATCH
MÉLANGE-MAÎTRE CONTENANT DE LA SUIE, POLYMÈRE COMPRENANT LE MÉLANGE-MAÎTRE, CORPS MOULÉ FORMÉ À PARTIR DU MÉLANGE-MAÎTRE OU DU MATÉRIAU POLYMÈRE ET PROCÉDÉ DE FABRICATION DE MÉLANGE-MAÎTRE

(43) Veröffentlichungstag der Anmeldung: 21.04.2021
(73) Patentinhaber: DAW SE, 64372 Ober-Ramstadt (DE)
(72) Erfinder: HÜBNER, Matthias, 04416 Markkleeberg (DE); RÖBER, Friedhelm, 04668 Grimma (DE)
(74) Vertreter: Metten, Karl-Heinz

(56) Entgegenhaltungen:
- US-A1- 2003 116 757
- US-A1- 2004 082 729
- US-A1- 2011 112 219

## Beschreibung

Die vorliegende Erfindung betrifft einen Masterbatch enthaltend Leitruß. Graphen, Fullerene und/oder Carbon-Nanotubes. Ferner betrifft die Erfindung einen Polymerwerkstoff umfassend diesen Masterbatch sowie einen Formkörper gebildet aus dem Masterbatch oder dem Polymerwerkstoff. Schließlich betrifft die Erfindung ein Verfahren zur Herstellung des Masterbatches.

Masterbatches werden regelmäßig zur anwendungsspezifischen Modifizierung, insbesondere Einfärbung von Kunststoffen eingesetzt. Masterbatches stellen hierbei polymergebundene Additivkonzentrate dar. Der Vorteil solcher Masterbatches ist, dass sie regelmäßig nur in sehr geringen Mengen einem Polymerwerkstoff beigemischt werden müssen, um dessen gewünschte Einfärbung bzw. funktionelle Modifizierung herbeizuführen. Diese Mengen liegen häufig im Bereich von 0,5 bis fünf Gewichtsprozent. Grundsätzlich können zwei Klassifizierungssysteme für die Einteilung von Masterbatches verwandt werden. Zum einen können Masterbatches eingeteilt werden in Farb-, Additiv- und Kombinationsmasterbatches. Diese Einteilung ist funktionsorientiert. Zum anderen können Masterbatches mit Blick auf das polymere Matrixmaterial, in das diese Masterbatches eingemischt werden, unterteilt werden in universale und polymerspezifische Masterbatches. Aufgrund von Kompatibilitätsproblemen, die auf die teilweise Unverträglichkeit der Polymere zurückzuführen sind, welche einerseits für den Masterbatch und andererseits für das polymere Matrixmaterial verwendet werden, und in Entmischungsphänomenen und Dispergierfehlern resultieren, sind universale Masterbatches für viele Anwendungen weiterhin problematisch, obgleich universale Masterbatches unter Lager- und Logistikaspekten durchaus ein erhebliches Rationalisierungspotenzial mit sich bringen würden. Der erfolgreiche Einsatz von Masterbatches hat seine Ursache insbesondere auch darin, dass feststoffbasierte Additive in Masterbatchpräparationen vollständig oder nahezu vollständig dispergiert vorliegen können. Hiermit geht einher, dass das dispersive Mischen zum Aufbrechen und Zerteilen von Agglomeraten und Aggregaten bei der Herstellung von Kunststoffwerkstoffen kaum erforderlich ist. Demgemäß sind in der Regel beim Einmischen von Masterbatches in polymere Matrixmaterialien keine zusätzlichen Dispergierhilfsmittel zuzugeben. Masterbatches werden im Allgemeinen in Form von Granulaten erhalten. Hierbei lassen sich solche Masterbatches besonders gut handhaben, bei denen die Granulate rieselfähig und staubfrei sind.

Masterbatches werden im Allgemeinen nach einem einstufigen oder einem zweistufigen Verfahren hergestellt. Bei der einstufigen Fertigung werden alle Rohstoffkomponenten vorgelegt und extrudiert. Bei der zweistufigen Variante werden zunächst sogenannte Monokonzentrate hergestellt, die anschließend nochmals gemischt und gegebenenfalls mit Additiven versehen und extrudiert werden. Um Masterbatches wirtschaftlich herstellen zu können, werden nach dem Stand der Technik kontinuierliche Extrusions- und Knetaggregate verwendet. Die Homogenität des Farbtons und der Pigmente im Masterbatch hängt dabei regelmäßig davon ab, welches Fließverhalten in der Schmelze erreicht wird, wie gut die Makromoleküle die Pigmente und/oder Füllstoffe benetzen können bzw. wie gut sich die Pigmente und/oder Füllstoffe in der Matrix verteilen. Oftmals gelingt es daher nicht oder nur in unzureichendem Umfang, Pigmente und/oder Füllstoffe unter Erhalt einer homogenen Durchmischung in einen Masterbatch einzuarbeiten. Aus diesem Grund werden Dispergierhilfsmittel bei der Masterbatchfertigung eingesetzt. Gleichwohl sind die maximalen Pigment-/Füllstoffkonzentrationen noch stets beschränkt. Dies steht dem allgemeinen Wunsch entgegen, Masterbatches mit sehr hohen Konzentrationen an Pigmenten oder Funktionsadditiven verfügbar machen zu können. So können beispielsweise durch trockene Calcinierung hergestellte Pigmente regelmäßig nur unter hohem Energieeintrag und zudem meist nur unvollständig in einen Masterbatch eingebracht werden. Man spricht hier auch von sogenannten dispergierharten Pigmenten.

In diesem Zusammenhang hat sich vielfach auch die Einbringung hoher Mengen an Ruß, insbesondere Leitruß, in Masterbatchmaterialien als problematisch erwiesen. Derartige Leitruß enthaltende Masterbatche wären jedoch von großem Vorteil, um auf besonders effiziente Weise daraus leitfähige Kunststoffformkörper herstellen zu können. Bislang sind aus dem Stand der Technik sehr speziell zugeschnittene Lösungsversuche bekannt. Beispielsweise werden in der EP 111 287 A2 Ruß enthaltende elektrisch leitfähige und nicht vernetzbare Formmassen auf der Basis von thermoplastischen Kunststoffen beschrieben, die dann zu Formkörpern mit einem Oberflächenwiderstand von höchstens 108 Ohm führen sollen, wenn hierfür elektrisch leitfähige und nicht vernetzbare Formmassen auf der Basis von thermoplastischen Kunststoffen und Ruß eingesetzt werden, bestehend im Wesentlichen aus 15 bis 75 Gew.-Teilen chloriertem Polyethylen mit einem mittleren Molekulargewicht von 10 000 bis 100 000 und einem Chlorgehalt von 20 bis 50 Gew.-%, bezogen auf das Gewicht des chlorierten Polyethylens,io bis 20. Gew.-Teilen Polyethylen mit einer Dichte von 0,940 bis 0,965 g pro cm³ und einem Schmelzindex von 0,1 bis 60 g pro 10 min bei 190 °C und 5 kp Belastung und/oder Polypropylen mit einer Dichte von 0,900 bis 0,915 g pro cm3 und einem Schmelzindex von 0,5 bis 30 g pro 10 min bei 190 °C und 5 kp Belastung, 10 bis 70 Gew.-Teilen von einem Füllstoff, ausgewählt aus der Gruppe bestehend aus Aluminiumhydroxid, Bariumsulfat, Calciumcarbonat, Magnesiumsilicat und Titandioxid mit einem mittleren Teilchendurchmesser von 0,5 bis 15 µm und 10 bis 25, bevorzugt 15 bis 20 Gew.-Teilen, Ruß mit einer spezifischen Oberfläche von 100 bis 400 m² pro g und einem mittleren Teilchendurchmesser von 10 bis 80 µm und/oder 4 bis 10 Gew.-Teilen Ruß mit einer spezifischen Oberfläche von 700 bis 1500 m² pro g und einem mittleren Teilchendurchmesser von 10 bis 80 µm.

Die US 2003/0116757 A1 stellt ab auf eine Harzzusammensetzung, umfassend ein Polyamid, einen Polyphenylenether, ein Schlagzähigkeitsmodifizierungsmittel und einen Füllstoff vom Kohlenstofftyp für eine elektrisch leitende Verwendung, wobei der Füllstoff in der Polyphenylenetherphase vorliegt. Diese Harzzusammensetzungen sollen eine ausgezeichnete elektrische Leitfähigkeit und Fließfähigkeit sowie ein ausgezeichnetes Gleichgewicht zwischen dem linearen Ausdehnungskoeffizienten und der Schlagzähigkeit aufweisen.

Die US 2011 /112219 A1 befasst sich mit thermoplastischen Elastomermischungen, enthaltend mindestens ein thermoplastisches Elastomer (ausgenommen ein thermoplastisches Polyurethan) und mindestens einen Füllstoff ausgewählt aus der Gruppe bestehend aus gefällter Kieselsäure und Ruß. Diese thermoplastischen Elastomermischungen sollen isotrope mechanische Eigenschaften aufweisen bzw. deren mechanische Eigenschaften wie Zugfestigkeit und Bruchdehnung sollen in Längs- und Querrichtung identisch oder nahezu identisch sein.

Die US 2004/0082729 A1 thematisiert einen leitfähiges Masterbatch, umfassend ein Polyamid und leitfähigen Ruß, wobei der leitfähige Ruß in Form von agglomerierten Teilchen mit einer Hauptachse von 20 bis 100 µm vorliegt, wobei die Anzahl dieser agglomerierten Teilchen 1 bis 100 beträgt, wie unter einem optischen Mikroskop in Bezug auf eine Fläche von 3 mm² ermittelt. Mit dem Masterbatch der US 2004/0082729 A1 sollen Materialien mit hoher Wärmeformbeständigkeit, hoher Schlagfestigkeit und mit einer für elektrostatische Beschichtungen ausreichenden Leitfähigkeit zugänglich sein.

Es ist daher wünschenswert, Masterbatches zu finden, in die weniger abhängig von dem zugrunde liegenden Polymer hohe Konzentrationen an Ruß einbringbar sind. Daher lag der vorliegenden Erfindung die Aufgabe zu Grunde, ein Verfahren zur Herstellung von Masterbatches bzw. nach diesem Verfahren erhaltene Masterbatche zur Verfügung zu stellen, die nicht mehr mit den Nachteilen des Stands der Technik behaftet sind und die insbesondere den unproblematischen Eintrag großer Mengen an Ruß, insbesondere Leitruß, in vielfältige Polymermaterialien gestatten. Insbesondere lag der vorliegenden Erfindung auch die Aufgabe zugrunde, einen wirtschaftlichen und zuverlässigen Zugang zu Masterbatches zu ermöglichen, die über hohe Konzentrationen an Ruß, insbesondere Leitruß, verfügen.

Demgemäß wurde ein Masterbatch gefunden, enthaltend oder gebildet aus
a) mindestens einem auf einem Styrolblockcopolymeren basierenden thermoplastischen Elastomer,
b) 12 bis 30 Gew.-%, insbesondere mehr als 20 Gew.-% an, bezogen auf das Gesamtgewicht des Masterbatches, Leitruß, Graphen, Fullerene und/oder Carbon-Nanotubes und
c) einem oder mehreren paraffinischen und/oder naphthenischen Ölen, sowie
d) gegebenenfalls Füllstoff und/oder Farbmittel, insbesondere Pigmente, erhalten durch

i) Mischen der Komponente c) mit, insbesondere einem Teil, der Komponente b) sowie gegebenenfalls der Komponente d) unter Ausbildung einer Suspension,
ii) Mischen der Suspension gemäß i) mit der Komponente a), insbesondere unter Ausbildung einer pulverförmigen Masse,
iii) gegebenenfalls Mischen der Zusammensetzung gemäß ii) mit einem weiteren, insbesondere dem verbleibenden, Teil der Komponente b), insbesondere unter Ausbildung einer pulverförmigen oder pastösen Masse, und
iv) Extrudieren der Zusammensetzung gemäß ii) oder iii), insbesondere unter Ausbildung eines Granulats,
wobei der Leitruß, Graphen, Fullerene und/oder Carbon-Nanotubes (Komponente b)) eine BET-Oberfläche, bestimmt gemäß ASTM D-6556-19, von 400 oder von größer 400 m²/g aufweisen.

Als thermoplastische Elastomere, die auf einem Styrolblockcopolymeren basieren, wird bevorzugt zurückgegriffen auf Styrol-Ethylen-Butylen-Styrol-Blockcopolymeren (SEBS), Styrol/Butadien-Styrol- Blockcopolymeren (SBS), Styrol-Ethylen/Propylen-Styrol-Blockcopolymeren (SEPS), Styrol-Isopren-Styrol-Blockcopolymeren (SIS), Styrol/Ethen-Ethen-Propen/Styrol-Bblockcopolymere (SEEPS), Styrol/Butadien-Isopren/Styrol-Blockcopolymeren (SBIS), vernetzungsfähigen Styrol-Ethylen-Propylen-Styrol-Blockcopolymeren oder deren beliebige Mischungen. Besonders bevorzugt kommen hierbei SEBS-Blockcopolymere zum Einsatz.

Grundsätzlich können für die erfindungsgemäßen Masterbatche Ruße ausgewählt werden, die nach unterschiedlichen Herstellverfahren erhalten wurden. Exemplarisch seien als nach unterschiedlichen Verfahren zugängliche Ruße solche aus der Gruppe bestehend aus Furnaceruß, Gasruß, Channelruß, Flammruß, Thermalruß, Acetylenruß, Plasmaruß, Inversionsruß, Si-haltigem Ruß, metallhaltigem Ruß und Lichtbogenruß genannt.

Die erfindungsgemäßen Masterbatche zeichnen sich insbesondere auch dadurch aus, dass sie 15 bis 28 Gew.-% sowie insbesondere mehr als 20 Gew.-%, jeweils bezogen auf das Gesamtgewicht des Masterbatches, an Leitruß, Graphen, Fullerenen und/oder Carbon-Nanotubes aufweisen. Bevorzugt liegt in den erfindungsgemäßen Masterbatches Leitruß in den vorangehend genannten Mengenbereichen vor.

Die bzw. das in den erfindungsgemäßen Masterbatchen verwendeten Leitruße, Graphen, Fullerene und/oder Carbon-Nanotubes, besonders bevorzugt Leitruße, (Komponente b)) verfügen in besonders vorteilhaften Ausgestaltungen über eine BET-Oberfläche, bestimmt gemäß ASTM D-6556-19, im Bereich von größer 400 bis 1750 m²/g und insbesondere im Bereich von 450 bis 1500 m²/g. Es hat sich überraschend gezeigt, dass sich die Komponente b), insbesondere Leitruße, selbst bei Einsatz der sich als bevorzugt herausgestellten BET-Oberflächen in großen Mengen, vorzugsweise auch oberhalb von 15 Gewichtsprozent, unproblematisch in der erfindungsgemäßen Masterbatche einbringen lässt.

Für die Herstellung der erfindungsgemäßen Masterbatch wird vorzugsweise zurückgegriffen auf Leitruße, die eine mittlere Primärteilchengröße D50 im Bereich von 1 nm bis 1.000 nm, bevorzugt im Bereich von 10 nm bis 800 nm und besonders bevorzugt im Bereich von 50 nm bis 500 nm aufweisen. In den bei der Herstellung der erfindungsgemäßen Masterbatche in Schritt i) zum Einsatz kommenden Suspensionen liegt Leitruß vorzugsweise mit einer mittleren Partikelgröße D50 kleiner oder gleich 50 µm, z.B. auch kleiner oder gleich 40 µm, vor. In der genannten Suspension liegen die Primärteilchen des Leitrußes regelmäßig als miteinander verbundene Aggregate bzw. Agglomerate vor. Die Angabe der mittleren Partikelgröße D50 für die in der Suspension vorliegenden Leitruße bezieht sich daher auf die mittlere Partikelgröße der aus Leitruß-Primärteilchen gebildeten Agglomerate bzw. Aggregate. Agglomerate bzw. Aggregate werden demgemäß aus einer Vielzahl aneinander haftender Ruß-Primärteilchen gebildet. Primärteilchen im Sinne der vorliegenden Erfindung sind demgemäß solche, die nicht im agglomerierten Zustand, sondern als Einzelteilchen vorliegen.

Die Partikelgröße D50 kann gemäß DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnung von mittleren Partikelgrößen/-durchmessern und Momenten aus Partikelgrößenverteilungen) ermittelt werden. Für die Bestimmung der D50-Werte kann dabei auf sogenannte Laser Scattering Particle Size Distribution Analyser, wie von der Firma Horiba unter der Gerätebezeichnung "LA 950 V2" erhältlich, zurückgegriffen werden.

Auch sind solche Leitruße besonders geeignet, um mit den erfindungsgemäßen Masterbatches die der Erfindung zugrunde liegende Aufgabe zu lösen, die über eine OAN-Zahl, bestimmt gemäß ASTM D-2414, im Bereich von 20 bis 1000 ml/ioog, bevorzugt im Bereich von 45 bis 450 ml/100g, verfügen.

In den erfindungsgemäßen Masterbatches umfasst bei der Komponente c) das paraffinische Öl vorzugsweise Weißöl oder stellt dieses dar. Die Komponente c) liegt in den erfindungsgemäßen Masterbatches, bezogen auf das Gewicht der Komponente a), d. h. bezogen auf die Menge an thermoplastischem Elastomer, das auf Styrolblockcopolymeren basiert, bevorzugt in einer Menge im Bereich von 5 bis 95 Gew.-% und besonders bevorzugt im Bereich von 10 bis 90 Gew.-% vor.

Die Komponente a) der erfindungsgemäßen Masterbatche wird in zweckmäßigen Ausgestaltungen entweder in Pulverform oder in Granulatform eingesetzt. In den erfindungsgemäßen Masterbatchen können ferner übliche Füllstoffe und/oder Farbmittel wie Pigmente verwendet werden. Bevorzugt sind solche erfindungsgemäßen Masterbatche, die im Wesentlichen frei von üblichen Füllstoffen und Pigmenten, insbesondere Farbmitteln, sind. Masterbatche, mit denen sich die der Erfindung zugrunde liegende Aufgabe besonders zufriedenstellend lösen lässt, sind vorzugsweise im Wesentlichen frei von Dispergierhilfsmitteln und/oder Netzmitteln sowie insbesondere im Wesentlichen frei von Dispergierhilfsmitteln und Netzmitteln. Auch hat es sich als zweckmäßig erwiesen, auf solche erfindungsgemäßen Masterbatche zurückzugreifen, die, alternativ oder insbesondere zusätzlich, im Wesentlichen frei von bei Raumtemperatur flüssigen Siliconen, insbesondere frei von jeglichen Silikonen, sind.

Bei der Herstellung der erfindungsgemäßen Masterbatche werden die Schritte i), ii) und/oder iii), bevorzugt mindestens der Schritt i) und besonders bevorzugt die Schritte i) und ii) sowie gegebenenfalls auch iii) vorzugsweise in einem diskontinuierlichen Mischaggregat durchgeführt. Auf diese Weise gelingt die Einbringung der Komponente b) besonders effizient und vollständig. Für diese diskontinuierlichen Mischaggregate kann dabei geeigneter Weise zurückgegriffen werden auf Kneter, Innenmischer, Butterfly-Mischer, Dissolver-Mischer, Schnecken-Mischer, Paddel-Mischer, Planeten-Mischer, Perlmühlen oder Dreiwalzreibstuhl-Mischer.

Für viele Anwendungen hat es sich als besonders zweckmäßig erwiesen, wenn bei der Herstellung der erfindungsgemäßen Masterbatche die in Schritt iii) erhaltene Zusammensetzung in Schritt iv) gemeinsam mit einem thermoplastischen Polymer extrudiert wird. Dieses thermoplastische Polymer wird dabei bevorzugt in Pulver- oder Granulatform mit zum Extruder zugegeben. Für das dem thermoplastischen Elastomer beimengbare thermoplastische Polymer wird vorzugsweise auf Polyester, Polyamide, Polystyrol, Styrol-Copolymere, Polyolefine, thermoplasische Polyurtehane, thermoplastische Polyharnstoffcopolymere oder deren beliebige Mischungen zurückgegriffen.

Das thermoplastische Polymer, das für die erfindungsgemäßen Masterbatche mit verwendet werden kann, stellt vorzugsweise ein sogenanntes Rohpolymer dar. Bei einem Rohpolymer handelt es sich regelmäßig um unbehandeltes Kunststoffmaterial, d. h. um ein Kunststoffmaterial, das noch keine Füllstoffe, Farbmittel, z.B. Pigmente, Additive und dergleichen enthält. Geeignete thermoplastische Polymeren, insbesondere Rohpolymere, können dabei ausgewählt werden aus der Gruppe bestehend aus Polyolefinen, insbesondere Polypropylen, Polyethylen und/oder Ethylen/Propylen- Copolymere, Polyamiden, Polycarbonaten, Polybutylen, Polyisobutylen, Polymethylmethacrylaten, Polymethacrylmethylimiden, Polyoxymethylen, Polyphenylenethern, Polystyrol, Polytetrafluorethylen, Polyvinylacetat, Polyvinylalkohol, Polyvinylchlorid, Polyvinylidenchlorid, Polyvinylidenfluorid, Polyestern, insbesondere Polyethylenterephthalat und/oder Polybutylenterephthalat und/oder thermoplastischen Polyesterelastomeren, Polyurethanen, Ethylen-Tetrafluorethylen-Copolymeren, Ethylenvinylacetat-Copolymeren, Ethylenvinylalkohol-Copolymeren, Styrol-Copolymeren, insbesondere ausgewählt aus der Gruppe bestehend aus Acrylnitril- Butadien-Styrol-Copolymeren, Acrylester-Styrol-Acrylnitril-Copolymeren, Methylmethacrylat-Aciylnitril-Butadien-Styrol-Copolymeren, Methacrylat - Butadien-Styrol-Copolymeren, Styrol-Acrylnitril-Copolymeren, Styrolbutadien-Copolymeren und Styrol-Maleinsäureanhydrid-Copolymeren, und deren beliebige Mischungen.

Die der Erfindung zugrunde liegende Aufgabe wird des Weiteren gelöst durch einen Polymerwerkstoff, umfassend mindestens einen erfindungsgemäßen Masterbatch und mindestens ein Matrixpolymer. Hierbei liegt der Masterbatch vorzugsweise als Mindermenge und das Matrixpolymer in einer Hauptmenge vor. Für das Matrixpolymer wird bevorzugt auf thermoplastische Polymere zurückgegriffen. Zusätzlich oder vorzugsweise alternativ können für das Matrixpolymer auch thermoplastische Elastomere, Elastomere, Duromere oder deren Mischungen eingesetzt werden.

Greift man für den erfindungsgemäßen Polymerwerkstoff auf thermoplastische Matrixpolymere zurück, was regelmäßig bevorzugt ist, werden diese bevorzugt ausgewählt aus der Gruppe bestehend aus Polyolefinen, insbesondere Polypropylen, Polyethylen und/oder Ethylen/Propylen- Copolymere, Polyamiden, Polycarbonaten, Polybutylen, Polyisobutylen, Polymethylmethacrylaten, Polymethacrylmethylimiden, Polyoxymethylen, Polyphenylenethern, Polystyrol, Polytetrafluorethylen, Polyvinylacetat, Polyvinylalkohol, Polyvinylchlorid, Polyvinylidenchlorid, Polyvinylidenfluorid, Polyestern, insbesondere Polyethylenterephthalat und/oder Polybutylenterephthalat und/oder thermoplastischen Polyesterelastomeren, Polyurethanen, Acrylnitril-Butadien-Styrol-Copolymeren, Acrylester-Styrol-Acrylnitril-Copolymeren, Ethylen-Tetrafluorethylen-Copolymeren, Ethylenvinylacetat-Copolymeren, Ethylenvinylalkohol-Copolymeren, Methylmethacrylat -Acrylnitril- Butadien-Styrol-Copolymeren, Methacrylat-Butadien-Styrol-Copolymeren, Styrol-Acrylnitril-Copolymeren, Styrolbutadien-Copolymeren, Styrol-Maleinsäureanhydrid-Copolymeren und deren beliebige Mischungen.

Für viele Anwendungen hat es sich als zweckmäßig erwiesen, dass in dem erfindungsgemäßen Polymerwerkstoff 10 bis 100 Gew.-%, bevorzugt 15 bis 90 Gew.-%, besonders bevorzugt 20 bis 80 Gew.-% und insbesondere 30 bis 70 Gew.-% an Masterbatch und 0 bis 90 Gew.-%, bevorzugt 10 bis 85 Gew.-%, besonders bevorzugt 20 bis 80 Gew.-% und insbesondere 30 bis 70 Gew.-% an Matrixpolymer, insbesondere thermoplastischem Matrixpolymer, vorliegen. Demgemäß kann in einer Ausführungsform der Polymerwerkstoff auch vollständig aus dem erfindungsgemäßen Masterbatch gebildet sein. Dies führt regelmäßig zu Werkstoffen bzw. Formkörpern mit sehr ausgeprägter elektrischer Leitfähigkeit.

Die erfindungsgemäßen Formkörpern lassen sich aus den geschilderten Komponenten zum Beispiel durch Spritzgießen, Extrudieren, Formpressen, Walzenrotation, Tiefziehen, Vakuumformen, Rotationsformen, Lasersintern, Fused Deposition Modelling (FDM), Granulieren und/oder Gießen des Polymerwerkstoffs erhalten.

Mit den erfindungsgemäßen Masterbatchen sind insbesondere auch solche erfindungsgemäßen Formkörpern zugänglich, die über einen spezifischen Volumenwiderstand im Bereich von 0,05 bis 100 Ohm*cm, bevorzugt im Bereich von 0,1 bis 10 Ohm*cm verfügen, jeweils ermittelt gemäß DIN EN ISO 3915, und die zusätzlich oder alternativ einen Oberflächenwiderstand kleiner 50 Ohm, bevorzugt kleiner 5 Ohm, ermittelt gemäß DIN EN ISO 3915, aufweisen.

Die erfindungsgemäßen Polymerwerkstoffe lassen sich insbesondere durch Mischen mindestens eines polymeren Matrixmaterials mit den nach dem erfindungsgemäßen Verfahren erhältlichen Masterbatches, jeweils in geschmolzenem Zustand, und Abkühlen der Mischung erhalten.

Mit dem erfindungsgemäßen Verfahren gelingt es regelmäßig, auf zuverlässige Weise Masterbatche zu erhalten, die sich unabhängig von der gewählten Konzentration unter Ausbildung der erfindungsgemäßen Polymerwerkstoffe sehr gut in polymere Matrixmaterialien einarbeiten lassen, ohne dass die Leitruße verklumpen oder dass Inhomogenitäten in den compoundierten Polymerwerkstoffen auftreten.

Die mit den erfindungsgemäßen Masterbatche ausgestatteten Polymerwerkstoffe zeichnen sich regelmäßig durch eine ausgeprägte Elastizität selbst bei niedrigen Temperaturen aus. Das polymere Material der erfindungsgemäßen Masterbatche wie auch die erfindungsgemäßen Polymerwerkstoffe enthaltend die erfindungsgemäßen Masterbatche verfügen über die vorteilhafte Eigenschaft, Leitruße über einen sehr breiten Konzentrationsbereich, insbesondere in sehr hohen Konzentrationen, in homogener Verteilung aufzunehmen, und zwar ohne dass es zur Bildung von Agglomeraten oder Aggregaten kommt.

Die der Erfindung zugrunde liegende Aufgabe wird des Weiteren gelöst durch ein Verfahren zur Herstellung des erfindungsgemäßen Masterbatches, umfassend die Schritte:
i) Mischen des paraffinischen und/oder naphthenischen Öls (Komponente c)) mit dem Leitruß, Graphen, Fullerene und/oder Carbon-Nanotubes, insbesondere Leitruß, (Komponente b)) oder einem Teil davon unter Ausbildung einer Suspension,
ii) Mischen der Suspension gemäß i) mit dem, insbesondere in Pulverform vorliegenden, auf einem Styrolblockcopolymeren basierenden thermoplastischen Elastomer (Komponente a)) oder einem Teil davon sowie gegebenenfalls der Komponente d) oder einem Teil davon, insbesondere unter Ausbildung einer pulverförmigen Masse,
iii) gegebenenfalls Mischen der Zusammensetzung gemäß ii) mit einem weiteren, insbesondere dem verbleibenden, Teil der Komponente b), und/oder gegebenenfalls mit einem weiteren, insbesondere dem verbleibenden, Teil der Komponente d), insbesondere unter Ausbildung einer pulverförmigen oder pastösen Masse, und
iv) Extrudieren der Zusammensetzung gemäß ii) oder iii), insbesondere unter Ausbildung eines Granulats.

Eine besonders homogene der Komponenten des erfindungsgemäßen Masterbatches wird insbesondere auch dadurch erhalten, dass die Zusammensetzung gemäß iii) in Schritt iv) gemeinsam mit einem, insbesondere in Pulver- oder Granulatform zum Extruder zugegebenen, thermoplastischen Polymer, insbesondere einem Polyester, Polystyrol, Styrol-Copolymeren oder Polyolefin, extrudiert wird.

Dabei sind solche Ausführungsvariante von besonderem Vorteil, bei denen die Schritte i), ii) und/oder iii), insbesondere die Schritte i) und ii) sowie gegebenenfalls auch iii), in einem diskontinuierlichen Mischaggregat durchgeführt werden. Das diskontinuierliche Mischaggregat wird bei dem erfindungsgemäßen Verfahren vorzugsweise ausgewählt aus der Gruppe bestehend aus Knetern, Innenmischern, Butterfly-Mischern, Dissolver-Mischern, Schnecken-Mischern, Paddel-Mischern, Planeten-Mischern, Perlmühlen und Dreiwalzreibstuhl-Mischern.

Ein besonders hoher Eintrag an Komponente b) in den Masterbatch gelingt auch dadurch, dass die Schritte i), ii) und/oder iii), insbesondere die Schritte i) und ii) oder die Schritte i), ii) und iii), ohne externe Wärmezufuhr durchgeführt werden und/oder dass der Schritt iv) mit externer Wärmezufuhr durchgeführt wird, insbesondere mit einer Wärmemenge, die ausreicht, das auf einem Styrolblockcopolymeren basierende thermoplastische Elastomer (Komponente a)) und/oder das thermoplastische Polymer auf eine Temperatur oberhalb der Glasübergangs- und/oder Schmelztemperatur, insbesondere oberhalb der Glasübergangstemperatur und gegebenenfalls auch oberhalb der Schmelztemperatur, zu erwärmen und/oder dass die Schritte i), ii) und/oder iii), insbesondere die Schritte i) und ii) oder die Schritte i), ii) und iii), unter Kühlung durchgeführt werden.

Bei dem erfindungsgemäßen Verfahren liegt in einer bevorzugten Ausführungsform in der gemäß Schritt i) erhaltenen Suspension der darin vorliegende Leitruß mit einer durchschnittlichen Partikelgröße kleiner oder gleich 50 µm vor.

Das erfindungsgemäße Verfahren wird in einer zweckmäßigen Ausgestaltung im Wesentlichen unter Ausschluss von Feuchtigkeit und/oder unter Schutzgas, insbesondere Stickstoff oder Argon, durchgeführt.

Eine solche Verfahrensführung führt regelmäßig zu vorteilhaften Resultaten, bei der der Schritt i) und der Schritt ii) sowie gegebenenfalls auch der Schritt iii) in einem Extruder umfassend mindestens ein förderndes Element stattfinden.

Zur Förderung eines komplikationslosen Verfahrensverlaufs kann man den Extruder in Schritt ii), iii) und/oder iv) entgasen, insbesondere vakuumentgasen.

Um einen regelmäßig stets einwandfreien Verfahrensverlauf sicherzustellen, kann man in einer bevorzugten Ausführungsform des erfindungsgemäßen Verfahrens vorsehen, dass der Extruder im Übergang vom Getriebe zu einem Schneckenzylinder, insbesondere mittels einer Stopfbuchspackung, abgedichtet wird.

Schließlich wird die der Erfindung zugrunde liegende Aufgabe gelöst durch ein Kit-of-parts-System für die Herstellung des erfindungsgemäßen Masterbatches, umfassend
Ai) eine Suspension enthaltend oder gebildet aus Ruß, insbesondere Leitruß, Graphen, Fullerene und/oder Carbon-Nanotubes (Komponente b)) und dem einen paraffinischen und/oder naphthenischen Öl (Komponente c)) oder
Aii) eine Mischung aus der Suspension gemäß i) und dem mindestens einen auf einem Styrolblockcopolymeren basierenden thermoplastischen Elastomer (Komponente a)), insbesondere in Form einer pulverförmigen Masse,
   und
B) dem mindestens einen, insbesondere in Pulver- oder Granulatform vorliegenden, thermoplastischen Polymer.

Mit den erfindungsgemäßen Masterbatches gelingt es stets ohne weiteres, daraus hergestellte Polymerwerkstoffe mit elektrisch ableitenden und/oder leitenden Eigenschaften auszustatten. Demgemäß können die erfindungsgemäßen Formkörper zuverlässig als sogenannte Electrostatic Discharge Sensitive (EDS)-Baukörper eingesetzt werden.

Die in der voranstehenden Beschreibung und den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Masterbatch, enthaltend oder gebildet aus
a) mindestens einem auf einem Styrolblockcopolymeren basierenden thermoplastischen Elastomer,
b) 12 bis 30 Gew.%, insbesondere mehr als 20 Gew.-% an, bezogen auf das Gesamtgewicht des Masterbatches, Leitruß, Graphen, Fullerene und/oder Carbon-Nanotubes und
c) einem oder mehreren paraffinischen und/oder naphthenischen Ölen, sowie
d) gegebenenfalls Füllstoff und/oder Farbmittel, durch
i) Mischen der Komponente c) mit, insbesondere einem Teil der Komponente b) unter Ausbildung einer Suspension,
ii) Mischen der Suspension gemäß i) mit der Komponente a) sowie gegebenenfalls der Komponente d),
iii) gegebenenfalls Mischen der Zusammensetzung gemäß ii) mit einem weiteren, insbesondere dem verbleibenden, Teil der Komponente b), und
iv) Extrudieren der Zusammensetzung gemäß ii) oder iii),
wobei der Leitruß, Graphen, Fullerene und/oder Carbon-Nanotubes (Komponente b)) eine BET-Oberfläche, bestimmt gemäß ASTM D-6556-19, von 400 oder von größer 400 m²/g aufweisen.

2. Masterbatch nach Anspruch 1, **dadurch gekennzeichnet, dass** das paraffinische Öl Weißöl umfasst oder darstellt.

3. Masterbatch nach Anspruch 1 oder 2, **dadurch gekennzeichnet, dass** dieses frei von jeglichen Silikonen ist.

4. Masterbatch nach einem der vorangehenden Ansprüche, **dadurch gekennzeichnet, dass**
das Styrolblockcopolymer-basierte thermoplastische Elastomer ein Rohpolymer darstellt und/oder ausgewählt ist aus der Gruppe bestehend aus Styrol-Ethylen-Butylen-Styrol-Blockcopolymeren (SEBS), Styrol/Butadien-Styrol-Blockcopolymeren (SBS), Styrol-Ethylen/Propylen-Styrol-Blockcopolymeren (SEPS), Styrol-Isopren-Styrol-Blockcopolymeren (SIS), Styrol/Ethen-Ethen-Propen/Styrol-Bblockcopolymere (SEEPS), Styrol/Butadien-Isopren/Styrol-Blockcopolymeren (SBIS), vernetzungsfähigen Styrol-Ethylen-Propylen-Styrol-Blockcopolymeren und deren beliebigen Mischungen, insbesondere SEBS-Blockcopolymer umfasst oder darstellt.

5. Masterbatch nach einem der vorangehenden Ansprüche, **dadurch gekennzeichnet, dass**
der Ruß ausgewählt ist aus der Gruppe bestehend aus Furnaceruß, Gasruß, Channelruß, Flammruß, Thermalruß, Acetylenruß, Plasmaruß, Inversionsruß, Si-haltigem Ruß, metallhaltigem Ruß, Lichtbogenruß und beliebigen Mischungen hiervon.

6. Masterbatch nach einem der vorangehenden Ansprüche, enthaltend
15 bis 28 Gew.-% an Leitruß, Graphen, Fullerene und/oder Carbon-Nanotubes, besonders bevorzugt Leitruß, (Komponente b)), jeweils bezogen auf das Gesamtgewicht des Masterbatches, und/oder
5 bis 95 Gew.-%, bevorzugt 10 bis 90 Gew.-% an Komponente c), bezogen auf das Gewicht der Komponente a).

7. Masterbatch nach einem der vorangehenden Ansprüche, **dadurch gekennzeichnet, dass**
die Zusammensetzung gemäß iii) in Schritt iv) gemeinsam mit einem, insbesondere in Pulver- oder Granulatform zum Extruder zugegebenen, thermoplastischen Polymer, insbesondere ausgewählt aus der Gruppe bestehend aus Polyestern, Polyamiden, Polystyrol, Styrol-Copolymeren, Polyolefinen, thermoplasischen Polyurtehanen, thermoplastischen Polyharnstoffcopolymeren und deren beliebigen Mischungen, extrudiert wird.

8. Masterbatch nach einem der vorangehenden Ansprüche, **dadurch gekennzeichnet, dass**
die Schritte i), ii) und/oder iii), insbesondere die Schritte i) und ii) sowie gegebenenfalls auch iii), in einem diskontinuierlichen Mischaggregat durchgeführt werden, insbesondere ausgewählt ist aus der Gruppe bestehend aus Knetern, Innenmischern, Butterfly-Mischern, Dissolver-Mischern, Schnecken-Mischern, Paddel-Mischern, Planeten-Mischern, Perlmühlen und Dreiwalzreibstuhl-Mischern.

9. Masterbatch nach Anspruch 7 oder 8, **dadurch gekennzeichnet, dass**
das thermoplastischen Polymer ein Rohpolymer darstellt und/oder ausgewählt ist aus der Gruppe bestehend aus
Polyolefinen, insbesondere Polypropylen, Polyethylen und/oder Ethylen/Propylen-Copolymere, Polyamiden, Polycarbonaten, Polybutylen, Polyisobutylen, Polymethylmethacrylaten, Polymethacrylmethylimiden, Polyoxymethylen, Polyphenylenethern, Polystyrol, Polytetrafluorethylen, Polyvinylacetat, Polyvinylalkohol, Polyvinylchlorid, Polyvinylidenchlorid, Polyvinylidenfluorid, Polyestern, insbesondere Polyethylenterephthalat und/oder Polybutylenterephthalat und/oder thermoplastischen Polyesterelastomeren, Polyurethanen, Ethylen-Tetrafluorethylen-Copolymeren, Ethylenvinylacetat-Copolymeren, Ethylenvinylalkohol-Copolymeren, Styrol-Copolymeren, insbesondere ausgewählt aus der Gruppe bestehend aus Acrylnitril-Butadien-Styrol-Copolymeren, Acrylester-Styrol-Acrylnitril-Copolymeren, Methylmethacrylat-Acrylnitril-Butadien-Styrol-Copolymeren, Methacrylat-Butadien-Styrol-Copolymeren, Styrol-Acrylnitril-Copolymeren, Styrolbutadien-Copolymeren und Styrol-Maleinsäureanhydrid-Copolymeren, und deren beliebige Mischungen.

10. Masterbatch nach einem der vorangehenden Ansprüche, **dadurch gekennzeichnet, dass**
Leitruß, Graphen, Fullerene und/oder Carbon-Nanotubes, insbesondere Leitruß, (Komponente b)), eine BET-Oberfläche, bestimmt gemäß ASTM D-6556-19, im Bereich von größer 400 bis 1750 m²/g und insbesondere im Bereich von 450 bis 1500 m²/g aufweist.

11. Masterbatch nach einem der vorangehenden Ansprüche, **dadurch gekennzeichnet, dass**
in der gemäß Schritt i) erhaltenen Suspension der darin vorliegende Leitruß über eine mittlere Partikelgröße D50, ermittelt gemäß DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnung von mittleren Partikelgrößen/- durchmessern und Momenten aus Partikelgrößenverteilungen), kleiner oder gleich 50 µm verfügt und/oder dass
der Leitruß eine OAN-Zahl, bestimmt gemäß ASTM D-2414, im Bereich von 20 bis 1000 ml/100g, bevorzugt im Bereich von 45 bis 450 ml/100g, aufweist.

12. Masterbatch nach einem der vorangehenden Ansprüche, **dadurch gekennzeichnet, dass**
die Komponente a) in Pulver- oder Granulatform vorliegt.

13. Masterbatch nach einem der vorangehenden Ansprüche, **dadurch gekennzeichnet, dass**
die Farbmittel Pigmente darstellen.

14. Masterbatch nach einem der vorangehenden Ansprüche, **dadurch gekennzeichnet, dass**
in Schritt ii) durch das Mischen der Suspension gemäß i) mit der Komponente a) sowie gegebenenfalls der Komponente d) eine pulverförmige Masse ausbildet wird und/oder dass
in Schritt iii) durch das Mischen der Zusammensetzung gemäß ii) mit einem weiteren, insbesondere dem verbleibenden, Teil der Komponente b) eine pulverförmige oder pastöse Masse ausgebildet wird.

15. Masterbatch nach einem der vorangehenden Ansprüche, **dadurch gekennzeichnet, dass**
in Schritt iv) durch das Extrudieren der Zusammensetzung gemäß iii) ein Granulat ausbildet,

16. Polymerwerkstoff, umfassend
mindestens einen Masterbatch gemäß einem der vorangehenden Ansprüche, insbesondere in einer Mindermenge, und mindestens ein, insbesondere thermoplastisches, Matrixpolymer, insbesondere in einer Hauptmenge.

17. Polymerwerkstoff nach Anspruch 16, **dadurch gekennzeichnet, dass**
das Matrixpolymer ausgewählt ist aus der Gruppe bestehend aus Thermoplasten, thermoplastischen Elastomeren, Elastomeren und Duromeren oder Mischungen hiervon.

18. Polymerwerkstoff nach Anspruch 16 oder 17, enthaltend
10 bis 100 Gew.-%, bevorzugt 15 bis 90 Gew.-%, besonders bevorzugt 20 bis 80 Gew.-% und insbesondere 30 bis 70 Gew.-% an Masterbatch und
0 bis 90 Gew.-%, bevorzugt 10 bis 85 Gew.-%, besonders bevorzugt 20 bis 80 Gew.-% und insbesondere 30 bis 70 Gew.-% an Matrixpolymer.

19. Formkörper, erhalten oder erhältlich durch Spritzgießen, Extrudieren, Formpressen, Vakuumformen, Tiefziehen, Walzenrotation, Rotationsformen, Lasersintern, Fused Deposition Modelling (FDM), Granulieren und/oder Gießen des Polymerwerkstoffs nach einem der Ansprüche 16 bis 18 oder des Masterbatches nach einem der Ansprüche 1 bis 15.

20. Formkörper nach Anspruch 19, **dadurch gekennzeichnet, dass** dieser über einen spezifischen Volumenwiderstand im Bereich von 0,05 bis 1000 Ohm*cm, bevorzugt im Bereich von 0,1 bis 100 Ohm*cm verfügt, jeweils ermittelt gemäß DIN EN ISO 3915, und/oder über einen Oberflächenwiderstand kleiner 50 Ohm, bevorzugt kleiner 5 Ohm, ermittelt gemäß DIN EN ISO 3915, verfügt.

21. Verfahren zur Herstellung eines Masterbatches gemäß einem der Ansprüche 1 bis 15 oder eines Polymerwerkstoffs gemäß einem der Ansprüche 16 bis 18, umfassend die Schritte:
i) Mischen des paraffinischen und/oder naphthenischen Öls (Komponente c)) mit dem Leitruß, Graphen, Fullerene und/oder Carbon-Nanotubes, insbesondere Leitruß, (Komponente b)) oder einem Teil davon unter Ausbildung einer Suspension, wobei in dieser Suspension der darin vorliegende Leitruß vorzugsweise über eine durchschnittliche Partikelgröße kleiner oder gleich 50 µm verfügt,
ii) Mischen der Suspension gemäß i) mit dem, insbesondere in Pulverform vorliegenden, auf einem Styrolblockcopolymeren basierenden thermoplastischen Elastomer (Komponente a)) oder einem Teil davon sowie gegebenenfalls der Komponente d) oder einem Teil davon, insbesondere unter Ausbildung einer pulverförmigen Masse,
iii) gegebenenfalls Mischen der Zusammensetzung gemäß ii) mit einem weiteren, insbesondere dem verbleibenden, Teil der Komponente b) und/oder mit einem weiteren, insbesondere dem verbleibenden, Teil der Komponente d), insbesondere unter Ausbildung einer pulverförmigen oder pastösen Masse, und
iv) Extrudieren der Zusammensetzung gemäß ii) oder iii), insbesondere unter Ausbildung eines Granulats.

22. Verfahren nach Anspruch 21, **dadurch gekennzeichnet, dass** die Zusammensetzung gemäß iii) in Schritt iv) gemeinsam mit einem, insbesondere in Pulver- oder Granulatform zum Extruder zugegebenen, thermoplastischen Polymer, insbesondere einem Polyester, Polystyrol, Styrol-Copolymeren oder Polyolefin, extrudiert wird.

23. Verfahren nach einem der Ansprüche 21 oder 22, **dadurch gekennzeichnet, dass** die Schritte i), ii) und/oder iii), insbesondere die Schritte i) und ii) sowie gegebenenfalls auch iii), in einem diskontinuierlichen Mischaggregat durchgeführt werden.

24. Verfahren nach einem der Ansprüche 21 bis 23, **dadurch gekennzeichnet, dass**
die Schritte i), ii) und/oder iii), insbesondere die Schritte i) und ii) oder die Schritte i), ii) und iii), ohne externe Wärmezufuhr durchgeführt werden und/oder dass
der Schritt iv) mit externer Wärmezufuhr durchgeführt wird, insbesondere mit einer Wärmemenge, die ausreicht, das auf einem Styrolblockcopolymeren basierende thermoplastische Elastomer (Komponente a)) und/oder das thermoplastische Polymer auf eine Temperatur oberhalb der Glasübergangs- und/oder Schmelztemperatur zu erwärmen und/oder dass
die Schritte i), ii) und/oder iii), insbesondere die Schritte i) und ii) oder die Schritte i), ii) und iii), unter Kühlung durchgeführt werden.

25. Verwendung des Masterbatches nach einem der Ansprüche 1 bis 15 zur Ausstattung von Polymerwerkstoffen mit elektrisch ableitenden und/oder leitenden Eigenschaften.

26. Verwendung der Formkörper nach Ansprüche 19 oder 20 als Electrostatic Discharge Sensitive (EDS)-Baukörper.

27. Kit-of-parts-System für die Herstellung eines Masterbatches gemäß einem der Ansprüche 1 bis 15, umfassend
Ai) eine Suspension enthaltend oder gebildet aus Leitruß, Graphen, Fullerene und/oder Carbon-Nanotubes (Komponente b)) und dem einen paraffinischen und/oder naphthenischen Öl (Komponente c)) oder
Aii) eine Mischung aus der Suspension gemäß i) und dem mindestens einen auf einem Styrolblockcopolymeren basierenden thermoplastischen Elastomer (Komponente a)), insbesondere in Form einer pulverförmigen Masse; und
B) dem mindestens einen, insbesondere in Pulver- oder Granulatform vorliegenden, thermoplastischen Polymer.

## Claims

1. Master batch containing or formed from
a) at least one thermoplastic elastomer based on a styrene block copolymer,
b) from 12 to 30% by weight, in particular more than 20% by weight, based on the total weight of the master batch, of conductive carbon black, graphene, fullerenes, and/or carbon nanotubes, and
c) one or more paraffinic and/or naphthenic oils, as well as
d) optionally filler and/or colorant, by
i) mixing component c) with, in particular a part of, component b) to form a suspension,
ii) mixing the suspension according to i) with component a) as well as optionally component d),
iii) optionally mixing the composition according to ii) with a further, in particular the remaining, part of component b), and
iv) extruding the composition according to ii) or iii),
wherein the conductive carbon black, graphene, fullerenes, and/or carbon nanotubes (component b)) have a BET surface area, determined according to ASTM D-6556-19, of 400 or greater than 400 m² /g.

2. Master batch according to claim 1, **characterized in that**
the paraffinic oil comprises or is white oil.

3. Master batch according to claim 1 or 2, **characterized in that**
it is free of any silicones.

4. Master batch according to one of the preceding claims, **characterized in that**
the thermoplastic elastomer based on styrene block copolymer is a crude polymer and/or is selected from the group consisting of styrene-ethylene-butylene-styrene block copolymers (SEBS), styrene/butadiene-styrene block copolymers (SBS), styrene-ethylene/propylene-styrene block copolymers (SEPS), styrene-isoprene-styrene block copolymers (SIS), styrene/ethene-ethene-propene/styrene Bblock copolymers (SEEPS), styrene/butadiene-isoprene/styrene block copolymers (SBIS), crosslinkable styrene-ethylene-propylene-styrene block copolymers and any mixtures thereof, in particular comprises or is SEBS block copolymer.

5. Master batch according to one of the preceding claims, **characterized in that**
the carbon black is selected from the group consisting of furnace carbon black, gas carbon black, channel carbon black, flame carbon black, thermal carbon black, acetylene carbon black, plasma carbon black, inversion carbon black, Si-containing carbon black, metal-containing carbon black, arc carbon black and any mixtures thereof.

6. Master batch according to one of the preceding claims, containing
from 15 to 28% by weight of conductive carbon black, graphene, fullerenes, and/or carbon nanotubes, particularly preferably conductive carbon black (component b)), based in each case on the total weight of the master batch, and/or
from 5 to 95% by weight, preferably from 10 to 90% by weight, of component c), based on the weight of component a).

7. Master batch according to one of the preceding claims, **characterized in that**
the composition according to iii) is extruded in step iv) together with a thermoplastic polymer, in particular selected from the group consisting of polyesters, polyamides, polystyrene, styrene copolymers, polyolefins, thermoplastic polyurethanes, thermoplastic polyurea copolymers, and any mixtures thereof, in particular added to the extruder in powder or granular form.

8. Master batch according to one of the preceding claims, **characterized in that**
the steps i), ii), and/or iii), in particular the steps i) and ii) as well as optionally also iii), are carried out in a discontinuous mixing unit, in particular selected from the group consisting of kneaders, internal mixers, butterfly mixers, dissolver mixers, screw mixers, paddle mixers, planetary mixers, bead mills and three-roll mill mixers.

9. Master batch according to claim 7 or 8, **characterized in that**
the thermoplastic polymer is a crude polymer and/or is selected from the group consisting of
polyolefins, in particular polypropylene, polyethylene, and/or ethylene/propylene copolymers, polyamides, polycarbonates, polybutylene, polyisobutylene, polymethyl methacrylates, polymethacrylmethylimides, polyoxymethylene, polyphenylene ethers, polystyrene, polytetrafluoroethylene, polyvinyl acetate, polyvinyl alcohol, polyvinyl chloride, polyvinylidene chloride, polyvinylidene fluoride, polyesters, in particular polyethylene terephthalate and/or polybutylene terephthalate, and/or thermoplastic polyester elastomers, polyurethanes, ethylene-tetrafluoroethylene copolymers, ethylene-vinyl acetate copolymers, ethylene-vinyl alcohol copolymers, styrene copolymers, in particular selected from the group consisting of acrylonitrile-butadiene-styrene copolymers, acrylic ester-styrene-acrylonitrile copolymers, methyl methacrylate-acrylonitrile-butadiene-styrene copolymers, methacrylate-butadiene-styrene copolymers, styrene-acrylonitrile copolymers, styrene-butadiene copolymers and styrene-maleic anhydride copolymers, and any mixtures thereof.

10. Master batch according to one of the preceding claims, **characterized in that** conductive carbon black, graphene, fullerenes, and/or carbon nanotubes, in particular conductive carbon black, (component b)) have a BET surface area, determined according to ASTM D-6556-19, in the range from greater than 400 to 1750 m² /g and in particular in the range from 450 to 1500 m² /g.

11. Master batch according to one of the preceding claims, **characterized in that**
in the suspension obtained according to step i), the conductive carbon black present therein has an average particle size D50, determined according to DIN ISO 9276-1:2004-09 (representation of the results of particle size analyses - part 1: graphical representation) and ISO 9276-2:2014-05 (representation of the results of particle size analyses - part 2: calculation of average particle sizes/diameters and moments from particle size distributions), of less than or equal to 50 µm, and/or **in that** the conductive carbon black has an OAN number, determined according to ASTM D-2414, in the range from 20 to 1000 ml/100 g, preferably in the range from 45 to 450 ml/100 g.

12. Master batch according to one of the preceding claims, **characterized in that** component a) is present in powder or granular form.

13. Master batch according to one of the preceding claims, **characterized in that**
the colorants are pigments.

14. Master batch according to one of the preceding claims, **characterized in that**
in step ii) a powdery mass is formed by mixing the suspension according to i) with component a) as well as optionally component d) and/or that
in step iii) a powdery or pasty mass is formed by mixing the composition according to ii) with a further, in particular the remaining, part of component b).

15. Master batch according to one of the preceding claims, **characterized in that**
in step iv) a granular material is formed by extruding the composition according to iii),

16. Polymer material comprising
at least one master batch according to one of the preceding claims, in particular in a minor amount, and at least one, in particular thermoplastic, matrix polymer, in particular in a major amount.

17. Polymer material according to claim 16, **characterized in that**
the matrix polymer is selected from the group consisting of thermoplastics, thermoplastic elastomers, elastomers and thermosets or mixtures thereof.

18. Polymer material according to claim 16 or 17, containing
from 10 to 100% by weight, preferably from 15 to 90% by weight, particularly preferably from 20 to 80% by weight, and in particular from 30 to 70% by weight, of master batch, and
from 0 to 90% by weight, preferably from 10 to 85% by weight, particularly preferably from 20 to 80% by weight, and in particular from 30 to 70% by weight, of matrix polymer.

19. Shaped article obtained or obtainable by injection molding, extrusion, compression molding, vacuum molding, deep drawing, roll rotation, rotational molding, laser sintering, fused deposition modelling (FDM), granulation and/or casting of the polymer material according to one of claims 16 to 18 or of the master batch according to one of claims 1 to 15.

20. Shaped article according to claim 19, **characterized in that**
it has a specific volume resistance in the range from 0.05 to 1000 ohm*cm, preferably in the range from 0.1 to 100 ohm*cm, determined in each case according to DIN EN ISO 3915, and/or has a surface resistance of less than 50 ohm, preferably less than 5 ohm, determined according to DIN EN ISO 3915.

21. Method for producing a master batch according to one of claims 1 to 15 or a polymer material according to one of claims 16 to 18, comprising the steps:
i) mixing the paraffinic and/or naphthenic oil (component c)) with the conductive carbon black, graphene, fullerenes, and/or carbon nanotubes, in particular conductive carbon black, (component b)) or a part thereof to form a suspension, wherein in this suspension the conductive carbon black present therein preferably has an average particle size of less than or equal to 50 µm,
ii) mixing the suspension according to i) with the thermoplastic elastomer based on a styrene block copolymer (component a)), in particular present in powder form, or a part thereof as well as optionally the component d) or a part thereof, in particular to form a powdery mass,
iii) optionally mixing the composition according to ii) with a further, in particular the remaining, part of component b) and/or with a further, in particular the remaining, part of component d), in particular to form a powdery or pasty mass, and
iv) extruding the composition according to ii) or iii), in particular to form a granular material.

22. Method according to claim 21, **characterized in that**
the composition according to iii) is extruded in step iv) together with a thermoplastic polymer, in particular a polyester, polystyrene, styrene copolymers, or polyolefin, in particular added to the extruder in powder or granular form.

23. Method according to one of claims 21 or 22, **characterized in that**
the steps i), ii), and/or iii), in particular the steps i) and ii) as well as optionally also iii), are carried out in a discontinuous mixing unit.

24. Method according to one of claims 21 to 23, **characterized in that**
the steps i), ii), and/or iii), in particular the steps i) and ii) or the steps i), ii), and iii), are carried out without external heat input and/or that
the step iv) is carried out with external heat input, in particular with an amount of heat that is sufficient to heat the thermoplastic elastomer based on a styrene block copolymer (component a)) and/or the thermoplastic polymer to a temperature above the glass transition and/or melting temperature and/or that
the steps i), ii), and/or iii), in particular the steps i) and ii) or the steps i), ii), and iii), are carried out under cooling.

25. Use of the master batch according to one of claims 1 to 15 for equipping polymer materials with electrically dissipating and/or conductive properties.

26. Use of the shaped articles according to claim 19 or 20 as electrostatic discharge sensitive (EDS) structural bodies.

27. Kit-of-parts system for the production of a master batch according to one of claims 1 to 15, comprising
Ai) a suspension containing or formed from conductive carbon black, graphene, fullerenes and/or carbon nanotubes (component b)) and the one paraffinic and/or naphthenic oil (component c)) or
Aii) a mixture of the suspension according to i) and the at least one thermoplastic elastomer based on a styrene block copolymer (component a)), in particular in the form of a pulverulent mass; and
B) the at least one thermoplastic polymer, in particular present in powder or granular form.

## Revendications

1. Masterbatch, contenant ou formé par
a) au moins un élastomère thermoplastique à base d'un copolymère à blocs styréniques,
b) 12 à 30 % en poids, en particulier plus de 20 % en poids, par rapport au poids total du masterbatch, de noir de carbone conducteur, de graphène, de fullerènes et/ou de nanotubes de carbone et
c) une ou plusieurs huiles paraffiniques et/ou naphténiques, ainsi que
d) le cas échéant une charge et/ou un colorant, par
i) le mélange du composant c) avec, en particulier une partie du composant b) avec formation d'une suspension,
ii) le mélange de la suspension selon i) avec le composant a) ainsi que le cas échéant le composant d),
iii) le cas échéant le mélange de la composition selon ii) avec une autre partie, en particulier la partie restante, du composant b), et
iv) l'extrusion de la composition selon ii) ou iii),
le noir de carbone conducteur, le graphène, les fullerènes et/ou les nanotubes de carbone (composant b)) présentant une surface BET, déterminée selon ASTM D-6556-19, de 400 ou supérieure à 400 m² /g.

2. Masterbatch selon la revendication 1, **caractérisé en ce que**
l'huile paraffinique comprend ou représente de l'huile blanche.

3. Masterbatch selon la revendication 1 ou 2, **caractérisé en ce que**
celui-ci est exempt de toutes silicones.

4. Masterbatch selon l'une quelconque des revendications précédentes, **caractérisé en ce que**
l'élastomère thermoplastique à base d'un copolymère à blocs styréniques représente un polymère brut et/ou est choisi dans le groupe constitué par les copolymères à blocs de styrène-éthylène-butylène-styrène (SEBS), les copolymères à blocs de styrène/butadiène-styrène (SBS), les copolymères à blocs de styrène-éthylène/propylène-styrène (SEPS), les copolymères à blocs de styrène-isoprène-styrène (SIS), les copolymères à bblocs de styrène/éthène-éthène-propène/styrène (SEEPS), les copolymères à blocs de styrène/butadiène-isoprène/styrène (SBIS), les copolymères à blocs de styrène-éthylène-propylène-styrène réticulables et leurs mélanges quelconques, en particulier le copolymère à blocs SEBS.

5. Masterbatch selon l'une quelconque des revendications précédentes, **caractérisé en ce que**
le noir de carbone est choisi dans le groupe constitué le noir de carbone de fourneau, le noir de carbone de gaz, le noir de carbone de canal, le noir de carbone de flamme, le noir de carbone thermique, le noir de carbone d'acétylène, le noir de carbone de plasma, le noir de carbone d'inversion, le noir de carbone contenant du Si, le noir de carbone contenant un métal, le noir de carbone d'arc électrique et leurs mélanges quelconques.

6. Masterbatch selon l'une quelconque des revendications précédentes, contenant 15 à 28 % en poids de noir de carbone conducteur, de graphène, de fullerènes et/ou de nanotubes de carbone, de manière particulièrement préférée de noir de carbone conducteur (composant b)), à chaque fois par rapport au poids total du masterbatch, et/ou
5 à 95 % en poids, de préférence 10 à 90 % en poids de composant c), par rapport au poids du composant a).

7. Masterbatch selon l'une quelconque des revendications précédentes, **caractérisé en ce que**
la composition selon iii) est extrudée à l'étape iv) conjointement avec un polymère thermoplastique, en particulier ajouté sous forme de poudre ou de granulés à l'extrudeuse, en particulier choisi dans le groupe constitué par les polyesters, les polyamides, le polystyrène, les copolymères de styrène, les polyoléfines, les polyuréthanes thermoplastiques, les copolymères de polyurée thermoplastiques et leurs mélanges quelconques.

8. Masterbatch selon l'une quelconque des revendications précédentes, **caractérisé en ce que**
les étapes i), ii) et/ou iii), en particulier les étapes i) et ii) ainsi que le cas échéant également iii), sont réalisées dans un appareil de mélange discontinu, en particulier choisi dans le groupe constitué par les malaxeurs, les mélangeurs internes, les mélangeurs Butterfly, les mélangeurs dissolveurs, les mélangeurs à vis sans fin, les mélangeurs à palettes, les mélangeurs planétaires, les broyeurs à billes et les mélangeurs à trois cylindres.

9. Masterbatch selon la revendication 7 ou 8, **caractérisé en ce que**
le polymère thermoplastique représente un polymère brut et/ou est choisi dans le groupe constitué par
les polyoléfines, en particulier le polypropylène, le polyéthylène, et/ou les copolymères d'éthylène/propylène, les polyamides, les polycarbonates, le polybutylène, le polyisobutylène, les polyméthylméthacrylates, les polyméthacrylméthylimides, le polyoxyméthylène, les polyphénylèneéthers, le polystyrène, le polytétrafluoroéthylène, l'acétate de polyvinyle, l'alcool polyvinylique, le polychlorure de vinyle, le polychlorure de vinylidène, le polyfluorure de vinylidène, les polyesters, en particulier le polyéthylène téréphtalate et/ou le polybutylène téréphtalate et/ou les élastomères de polyester thermoplastiques, les polyuréthanes, les copolymères d'éthylène-tétrafluoroéthylène, les copolymères d'éthylène-acétate de vinyle, les copolymères d'éthylène-alcool vinylique, les copolymères de styrène, en particulier choisis dans le groupe constitué par les copolymères d'acrylonitrile-butadiène-styrène, les copolymères d'ester acrylique-styrène-acrylonitrile, les copolymères de méthacrylate de méthyle-acrylonitrile-butadiène-styrène, les copolymères de méthacrylate-butadiène-styrène, les copolymères de styrène-acrylonitrile, les copolymères de styrène-butadiène et les copolymères de styrène-anhydride maléique, et leurs mélanges quelconques.

10. Masterbatch selon l'une quelconque des revendications précédentes, **caractérisé en ce que**
le noir de carbone conducteur, le graphène, les fullerènes et/ou les nanotubes de carbone, en particulier le noir de carbone conducteur (composant b)), présentent une surface BET, déterminée selon ASTM D-6556-19, dans la plage de plus de 400 à 1750 m² /g et en particulier dans la plage de 450 à 1500 m² /g.

11. Masterbatch selon l'une quelconque des revendications précédentes, **caractérisé en ce que**
dans la suspension obtenue selon l'étape i), le noir de carbone conducteur présente dans celle-ci dispose d'une taille de particule moyenne D50, déterminée selon DIN ISO 9276-1:2004-09 (représentation des résultats d'analyses de taille de particule - partie 1 : représentation graphique) et ISO 9276-2:2014-05 (représentation des résultats d'analyses de taille de particule - partie 2 : calcul de tailles/diamètres et moments moyens à partir de distributions de tailles de particule), inférieure ou égale à 50 µm et/ou **en ce que**
le noir de carbone conducteur présente un indice OAN, déterminé selon ASTM D-2414, dans la plage de 20 à 1000 ml/100 g, de préférence dans la plage de 45 à 450 ml/100 g.

12. Masterbatch selon l'une quelconque des revendications précédentes, **caractérisé en ce que**
le composant a) se présente sous forme de poudre ou de granulés.

13. Masterbatch selon l'une quelconque des revendications précédentes, **caractérisé en ce que**
les colorants sont des pigments.

14. Masterbatch selon l'une quelconque des revendications précédentes, **caractérisé en ce que**
à l'étape ii), une masse pulvérulente est formée par le mélange de la suspension selon i) avec le composant a) ainsi que le cas échéant le composant d), et/ou **en ce que**
à l'étape iii), une masse pulvérulente ou pâteuse est formée par le mélange de la composition selon ii) avec une autre partie, en particulier la partie restante, du composant b).

15. Masterbatch selon l'une quelconque des revendications précédentes, **caractérisé en ce que**
à l'étape iv), un granulé est formé par l'extrusion de la composition selon iii),

16. Matériau polymère comprenant
au moins un masterbatch selon l'une quelconque des revendications précédentes, en particulier en une quantité mineure, et au moins un polymère de matrice, en particulier thermoplastique, en particulier en une quantité majeure.

17. Matériau polymère selon la revendication 16, **caractérisé en ce que**
le polymère de matrice est choisi dans le groupe constitué par les thermoplastiques, les élastomères thermoplastiques, les élastomères et les duromères ou leurs mélanges.

18. Matériau polymère selon la revendication 16 ou 17, contenant
10 à 100 % en poids, de préférence 15 à 90 % en poids, de manière particulièrement préférée 20 à 80 % en poids et en particulier 30 à 70 % en poids de masterbatch et
0 à 90 % en poids, de préférence 10 à 85 % en poids, de manière particulièrement préférée 20 à 80 % en poids et en particulier 30 à 70 % en poids de polymère de matrice.

19. Corps moulé, obtenu ou pouvant être obtenu par moulage par injection, extrusion, moulage par compression, moulage sous vide, emboutissage profond, rotation de cylindres, moulage par rotation, frittage au laser, modélisation par dépôt en fusion (FDM), granulation et/ou coulée du matériau polymère selon l'une quelconque des revendications 16 à 18 ou du masterbatch selon l'une quelconque des revendications 1 à 15.

20. Corps moulé selon la revendication 19, **caractérisé en ce que**
celui-ci dispose d'une résistivité volumique dans la plage de 0,05 à 1000 Ohm*cm, de préférence dans la plage de 0,1 à 100 Ohm*cm, à chaque fois déterminée selon DIN EN ISO 3915, et/ou d'une résistivité superficielle inférieure à 50 Ohm, de préférence inférieure à 5 Ohm, déterminée selon DIN EN ISO 3915.

21. Procédé de fabrication d'un masterbatch selon l'une quelconque des revendications 1 à 15 ou d'un matériau polymère selon l'une quelconque des revendications 16 à 18, comprenant les étapes :
i) le mélange de l'huile paraffinique et/ou naphténique (composant c)) avec le noir de carbone conducteur, le graphène, les fullerènes et/ou les nanotubes de carbone, en particulier le noir de carbone conducteur, (composant b)) ou une partie de ceux-ci avec formation d'une suspension, le noir de carbone conducteur présente dans cette suspension disposant de préférence d'une taille de particule moyenne inférieure ou égale à 50 µm,
ii) le mélange de la suspension selon i) avec l'élastomère thermoplastique à base d'un copolymère de bloc de styrénique (composant a)), en particulier sous forme de poudre, ou une partie de celui-ci ainsi que le cas échéant le composant d) ou une partie de celui-ci, en particulier avec formation d'une masse pulvérulente,
iii) le cas échéant le mélange de la composition selon ii) avec une autre partie, en particulier la partie restante, du composant b) et/ou avec une autre partie, en particulier la partie restante, du composant d), en particulier avec formation d'une masse pulvérulente ou pâteuse, et
iv) l'extrusion de la composition selon ii) ou iii), en particulier avec formation d'un granulé.

22. Procédé selon la revendication 21, **caractérisé en ce que**
la composition selon iii) est extrudée à l'étape iv) conjointement avec un polymère thermoplastique, en particulier ajouté sous forme de poudre ou de granulés à l'extrudeuse, en particulier un polyester, un polystyrène, des copolymères de styrène ou une polyoléfine.

23. Procédé selon l'une quelconque des revendications 21 ou 22, **caractérisé en ce que** les étapes i), ii) et/ou iii), en particulier les étapes i) et ii) ainsi que le cas échéant également iii), sont réalisées dans un appareil de mélange discontinu.

24. Procédé selon l'une quelconque des revendications 21 à 23, **caractérisé en ce que** les étapes i), ii) et/ou iii), en particulier les étapes i) et ii) ou les étapes i), ii) et iii), sont réalisées sans apport de chaleur externe et/ou **en ce que**
l'étape iv) est réalisée avec apport de chaleur externe, en particulier avec une quantité de chaleur suffisante pour chauffer l'élastomère thermoplastique à base d'un copolymère de bloc de styrénique (composant a)) et/ou le polymère thermoplastique à une température supérieure à la température de transition vitreuse et/ou de fusion et/ou **en ce que**
les étapes i), ii) et/ou iii), en particulier les étapes i) et ii) ou les étapes i), ii) et iii), sont réalisées avec refroidissement.

25. Utilisation du masterbatch selon l'une quelconque des revendications 1 à 15 pour l'équipement de matériaux polymères avec des propriétés électroconductrices et/ou conductrices.

26. Utilisation des corps moulés selon la revendication 19 ou 20 en tant que corps de construction électrostatique sensible aux décharges (EDS).

27. Système kit-of-parts pour la fabrication d'un masterbatch selon l'une quelconque des revendications 1 à 15, comprenant
Ai) une suspension contenant ou formée par de le noir de carbone, du graphène, des fullerènes et/ou des nanotubes de carbone (composant b)) et ladite une huile paraffinique et/ou naphténique (composant c)) ou
Aii) un mélange de la suspension selon i) et dudit au moins un élastomère thermoplastique à base d'un copolymère de bloc de styrénique (composant a)), en particulier sous forme d'une masse pulvérulente ; et
B) ledit au moins un polymère thermoplastique, en particulier présent sous forme de poudre ou de granulés.
